# EUROPÄISCHE PATENTSCHRIFT

(11) **EP 2 794 152 B1**
(45) Veröffentlichungstag und Bekanntmachung des Hinweises auf die Patenterteilung: **07.04.2021**
(21) Anmeldenummer: 12812180.3
(22) Anmeldetag: 27.11.2012
(51) Int. Cl.: B22F 3/23, B22F 3/105, B22F 7/06, B29C 64/153, B22F 1/00, B22F 3/10, B33Y 10/00, B33Y 80/00

(54) **VERFAHREN ZUR FERTIGUNG EINES KOMPAKTEN BAUTEILS SOWIE MIT DEM VERFAHREN HERSTELLBARES BAUTEIL**
METHOD FOR MANUFACTURING A COMPACT COMPONENT, AND COMPONENT THAT CAN BE PRODUCED BY MEANS OF THE METHOD
PROCÉDÉ DE FABRICATION D'UN COMPOSANT COMPACT ET COMPOSANT PRODUIT AU MOYEN DUDIT PROCÉDÉ

(30) Priorität: 20.12.2011 DE 102011089194
(43) Veröffentlichungstag der Anmeldung: 29.10.2014
(73) Patentinhaber: Fraunhofer Gesellschaft zur Förderung der angewandten Forschung e.V., 80686 München (DE)
(72) Erfinder: UHLMANN, Eckart, 25368 Kiebitzreihe (DE); GÜNSTER, Jens, 38678 Clausthal-Zellerfeld (DE); GOMES, Cynthia Morais, 12163 Berlin (DE); BERGMANN, André, 13086 Berlin (DE); KÖNIG-URBAN, Kamilla, 5430 Wettingen (DE)
(74) Vertreter: Gulde & Partner
(86) Internationale Anmeldenummer: PCT/EP2012/073672
(87) Internationale Veröffentlichungsnummer: WO 2013/092123

(56) Entgegenhaltungen:
- DE-A1-102007 020 389
- US-A- 5 182 170
- US-A- 5 431 967
- US-A1- 2005 208 168
- US-B2- 7 357 887
- SHISHKOVSKY I V ET AL: "Surface Laser Sintering of exothermic powder compositions; A thermal and SEM/EDX study", JOURNAL OF THERMAL ANALYSIS AND CALORIMETRY, KLUWER ACADEMIC PUBLISHERS, DORDRECHT, NL, vol. 91, no. 2, 13 October 2007 (2007-10-13), pages 427-436, XP019577809, ISSN: 1572-8943

## Beschreibung

Die Erfindung betrifft ein Verfahren zur Fertigung, insbesondere zur zumindest teilweisen generativen Fertigung, eines kompakten Bauteils, welches eine Hülle umfasst sowie ferner eine, einen Innenraum der Hülle füllende Kernstruktur. Ein weiterer Aspekt der Erfindung betrifft ein solches, durch das Verfahren herstellbares Bauteil.

Generative Fertigungsverfahren zeichnen sich durch den Aufbau von Bauteilen aus formlosen, insbesondere pulverförmigen Werkstoffmaterialien aus. Es handelt sich somit um materialaufbauende Verfahren, wohingegen materialabtragende Fertigungsverfahren das Bauteil grundsätzlich aus Halbzeugen oder kompakten Werkstücken herstellen. Darüber hinaus kommen generative Fertigungsverfahren ohne Formwerkzeugen aus. Die generativen Fertigungsverfahren der Gruppe der Strahlschmelzverfahren sind in der Lage, hochkomplexe Bauteilgeometrien zu erzeugen. Laut VDI-Richtlinie 3404 werden folgende Verfahren unter dem Oberbegriff des Strahlschmelzens zusammengefasst: Laser Forming, Selective Laser Melting (SLM), Laser-Cusing, Electron Beam Melting (EBM) und Direktes-Metall-Laser-Sintern (DMLS).

Insbesondere ist bekannt, die gesamte Bauteilgeometrie generativ in einem Strahlschmelzprozess aufzubauen. Im Vorfeld der eigentlichen Fertigung werden hierfür zunächst die notwendigen Bauteilinformationen in Form von 3D-CAD-Daten bereitgestellt. Sodann wird das CAD-Bauteilmodell mittels spezieller Software rechnerisch in übereinander liegende Schichten (Schichtebenen) definierter Schichtdicke zerlegt (dieser Vorgang wird auch als Slicen bezeichnet) und die Schichten in einzelne Laservektoren zerlegt (Hatchen). Der sich anschließende Strahlschmelzprozess umfasst drei sich zyklisch wiederholende Phasen. In der ersten Phase wird eine Substratplatte um die vordefinierte Schichtdicke gemäß dem zuvor durchgeführten Slice-Vorgang abgesenkt. In der zweiten Phase wird eine Schicht des Werkstoffpulvers mit einem Beschichter auf die Substratplatte aufgebracht. In der dritten Phase werden gemäß den ermittelten Laservektoren die Konturflächen des Bauteils in der aufgebrachten Pulverschicht unter Verwendung eines Lasers, etwa eines diodengepumpten Festkörper-Faserlasers, vollständig lokal aufgeschmolzen. Abhängig vom Werkstoff kommt es dabei zum Erschmelzen oder Sintern des Materials und somit zu einer Verfestigung des pulverförmigen Materials entsprechend der Bauteilgeometrie der Schicht. Diese Schritte werden wiederholt, bis die letzte Bauteilschicht erzeugt ist. Abschließend wird die verfestigte Struktur von dem nicht-verfestigten Pulver befreit, welches aufbereitet und erneut dem generativen Prozess zugeführt werden kann.

Ein solches generatives Strahlschmelzverfahren, nämlich selektives Lasersintern (SLS), ist beispielsweise in US 5,182,170 oder Shishkovsky et al. (Journal of Thermal Analysis and Calorimetry, Vol. 91(2), 2008, 427-436) beschrieben.

US 5,431,967 beschreibt ein Verfahren zur Herstellung eines dreidimensionalen, hohlen Bauteils aus einem nanopartikulären Kompositwerkstoff ebenfalls mittels selektivem Lasersintern (SLS).

US 2005/0208168 A1 beschreibt die generative Herstellung einer Hülle sowie einer innerhalb der Hülle befindlichen Gitterstruktur mit einem generativen Aufbauverfahren.

In Weiterentwicklung der zuvor beschriebenen Vorgehensweise kann in die so erzeugte äußere Hülle eines Bauteils die Schmelze eines reinen Metalls oder einer Metalllegierung gegossen werden, um eine Kernstruktur auszubilden. In diesem Zusammenhang ist beispielsweise bekannt, dass Kupfer- oder Aluminiumlegierungen als Kernwerkstoff verwendet werden. Das Ergebnis sind beispielsweise Werkzeugeinsätze, die aufgrund der guten Wärmeleitfähigkeit des Kerns eine gleichmäßig hohe Kühlwirkung erreichen.

Um die Aufbaurate generativer Fertigungsverfahren zu erhöhen, ist ferner bekannt, die Laserleistung gezielt zu erhöhen, wobei derzeit eine Laserleistung von etwa 1 kW erreicht wird. Da die Erhöhung der Leistung bei konstantem Laserstrahldurchmesser zu einer vermehrten Spritzerbildung führt, wird bei diesem Lösungsansatz der Strahldurchmesser auf bis zu 1 mm vergrößert und das bestehende Strahlprofil, welches einer Gauß'schen Verteilung entspricht, gestreut. Um der hierbei sinkenden Oberflächengüte zu begegnen, kann ein Mehrstrahlkonzept eingesetzt werden, welches die Bearbeitung mit unterschiedlichen Laserleistungen und Fokusdurchmessern ermöglicht.

Abhängig vom verarbeiteten Materialsystem, ist ferner bekannt, so genannte Grünkörper mittels generativer Fertigungsverfahren aufzubauen, die in einem anschließenden Prozessschritt zur Festigkeitserhöhung einer thermischen Behandlung unterzogen werden. Eine solche thermische Behandlung ist für die meisten Verbundwerkstoffe oder keramischen Werkstoffsysteme unumgänglich, was für den Einsatz dieser Verfahren in der Massenproduktion abträglich ist.

DE 10 2005 055 524 A beschreibt ein Verfahren zur Herstellung eines Hohlkörpers beispielsweise für Zahnkeramiken, wobei ein Grünkörper aus einem Werkstoffpulver wie beispielsweise SiO₂ mit einer profilierten Oberflächenkontur durch herkömmliche Umformungsverfahren, wie Pressen oder Gießen, durch materialabtragende Verfahren oder durch auftragende Verfahren, wie 3D-Printen oder Abscheiden, hergestellt wird und anschließend die Oberfläche durch Laserbestrahlung gesintert und somit verfestigt wird. Abschließend wird loses, nicht gesintertes Werkstoffpulver entfernt.

Darüber hinaus sind nanopartikuläre oder nanostrukturierte Werkstoffe als Fügematerialien zum Verbinden von Bauteilen bekannt.

So ist aus DE 10 2007 020 389 A1 ein Fügeverfahren zum Verbinden zweier Bauteile bekannt, bei dem zwischen die Fügeflächen der Bauteile eine Schicht eines nano- oder mikrostrukturierten Werkstoffs aufgebracht wird und anschließend eine exotherme Reaktion des nano- oder mikrostrukturierten Werkstoffs ausgelöst wird. Infolge der Wärmefreisetzung kommt es zu einem partiellen Aufschmelzen und Verbinden des Bauteilmaterials. Optional können zwischen dem nano- oder mikrostrukturierten Werkstoff und den Fügeflächen der Bauteile noch Schichten eines verbindenden Materials aufgebracht werden.

Bei dem aus DE 10 2006 009 159 A bekannten Fügeverfahren zur Herstellung eines Metall-Keramik-Verbundsubstrats wird zwischen die zu verbindenden Bauteile eine Schicht eines Sintermaterials aufgebracht und dieses nachfolgend bei erhöhter Temperatur und erhöhtem Druck gesintert.

Aus DE 10 2008 037 263 A ist ein Lot-Werkstoff in Form einer Dispersion bekannt, die ein Dispersionsmittel und ein in diesem dispergiertes Lot-Pulver aufweist. Das Lot-Pulver besteht aus Nanopartikeln eines Metalls mit mittleren Partikeldurchmessern im Bereich von 20 nm bis 40 nm. Optional kann das Dispersionsmittel ein polymeres Reaktionsharz aufweisen, das unter Wärmeeinwirkung eine Vernetzungsreaktion eingeht. Der Lot-Werkstoff wird zum Verbinden zweier Baueile unter Wärmebehandlung verwendet.

US 6,033,624 beschreibt verschiedene Verfahren zur Herstellung nanopartikulärer Pulver aus Metallen, Metallcarbiden oder Metalllegierungen sowie ihre Verfestigung zu einem nanostrukturierten Material in einem Formwerkzeug durch Verdichtung, insbesondere durch Vakuumheißverpressen.

Hinderlich für den Einsatz der modernen generativen Fertigungsverfahren für die Serienfertigung sind die derzeit niedrigen Aufbauraten im Bereich von 5 bis 20 cm³/h. Um das Einsatzgebiet der Verfahren über die Prototypen- und Einzelteilfertigung hinaus auszuweiten, ist eine Erhöhung der Aufbaurate wünschenswert. Darüber hinaus erreichen die mit heutigen Verfahren generativ aufgebauten Werkstücke aus ausgewählten Werkstoffsystemen, wie beispielsweise keramischen Werkstoffen, häufig nicht die für eine Serienfertigung von Endprodukten erforderlichen Bauteileigenschaften.

Der Erfindung liegt daher die Aufgabe zugrunde, ein Verfahren zum generativen Aufbau eines kompakten Bauteils vorzuschlagen, das sich durch eine erhöhte Aufbaurate sowie durch verbesserte Materialeigenschaften auszeichnet.

Diese Aufgabe wird durch ein Verfahren zur Fertigung eines kompakten Bauteils sowie durch ein mit dem Verfahren herstellbares Bauteil mit den Merkmalen der unabhängigen Ansprüche gelöst.

Das erfindungsgemäße kompakte Bauteil weist eine Hülle und eine innerhalb der Hülle befindliche Gitterstruktur jeweils aus einem Hüllmaterial auf. Das Bauteil umfasst erfindungsgemäß ferner eine Kernstruktur aus einem Kernmaterial, welche einen Innenraum der Hülle im Wesentlichen vollständig ausfüllt. Bei dem Kernmaterial der Kernstruktur handelt es sich insbesondere um ein aus einem nanopartikulären Werkstoff erzeugtes Material. Das Hüllmaterial und das Kernmaterial sind unterschiedlich. Sie sind aus der Gruppe bestehend aus metallischen Materialien, keramischen Materialien und/oder Gläsern ausgewählt.

Durch die Füllung des Innenraums des Bauteils mit einem aus einem nanopartikulären Werkstoff gebildeten Kernmaterial wird ein kompaktes Bauteil erhalten, das gegenüber aus herkömmlichen Pulvermaterialien mit Partikeldurchmessern im Bereich von Mikrometern gefertigten Bauteilen hinsichtlich seiner physikalischen und mechanischen Eigenschaften deutlich überlegen ist. Insbesondere werden Bauteile mit herausragender Stabilität und Festigkeit erzeugt. Vor allem durch die Integration metallischer Gitterstrukturen hoher Zugfestigkeiten innerhalb eines harten und/oder spröden Kernmaterials wird die Fertigung von Bauteilen, die die Vorteile beider Werkstoffgruppen in sich vereinen, möglich. Hohe Dichte, geringere Porosität, hohe Festigkeit sowie verbesserte optische und thermische Eigenschaften der aufzubauenden Werkstücke können mit dem vorliegenden Verfahren erreicht werden.

Die Differenzierung des Bauteils in eine Hülle (oder Schale) und der inneren Gitterstruktur einerseits sowie der Kernmatrix andererseits erlaubt die Fertigung dreidimensionaler Werkstücke hochkomplexer Geometrie aus komplexen Verbundwerkstoffen. Diese Kombination ermöglicht, die Bauteileigenschaften gezielt einzustellen und an unterschiedliche Anforderungen anzupassen. Im Sinne von Multifunktionsbauteilen kann die Hülle und die innere Gitterstruktur durch geeignete Auswahl der Werkstoffe und der dreidimensionalen Form auf eine bestimmte Funktionalität des aufzubauenden Werkstücks abgestimmt werden. Dabei können der Werkstoff sowie die Form der Kernstruktur entsprechend von der Hülle abweichen.

Das erfindungsgemäße Verfahren zur Fertigung eines solchen kompakten Bauteils umfasst die Stufen:
(a) generativer Aufbau zumindest einer, entlang einer Schnittebene des Bauteils verlaufenden Schicht der Hülle und der Gitterstruktur aus einem partikulären Werkstoff des Hüllmaterials oder zumindest eines Edukts desselben mittels eines Strahlschmelzverfahrens, umfassend die Schritte:
   (a1) Aufbringen einer Schicht des partikulären Werkstoffs des Hüllmaterials oder wenigstens eines Edukts desselben und
   (a2) Erschmelzen, Sintern und/oder Verfestigen des Werkstoffs zur Ausbildung einer Schicht der Hülle und der Gitterstruktur durch Einstrahlen von Laserlicht entsprechend einer Kontur des Bauteils entlang der Schnittebene des Bauteils; und
(b) Erschmelzen, Sintern und/oder Verfestigen eines in dem Innenraum der zumindest einen Schicht der Hülle befindlichen nanopartikulären Werkstoffs des Kernmaterials oder zumindest eines Edukts desselben zur Ausbildung der Kernstruktur des Bauteils,
wobei
bis zu einer vorbestimmten Bauteilhöhe des Bauteils zunächst die Hülle und die Gitterstruktur schichtweise durch Wiederholungen der Schritte (a1) und (a2) generativ aufgebaut werden, anschließend (b1) der Innenraum der Hülle mit dem nanopartikulären Werkstoff des Kernmaterials oder zumindest eines Edukts desselben befüllt wird oder der Innenraum mit dem Werkstoff des Kernmaterials, der mit dem Werkstoff des Hüllmaterials identisch ist, befüllt bleibt, und (b2) durch Erschmelzen, Sintern und/oder Verfestigen die Kernstruktur des Bauteils ausgebildet wird;
oder
die Fertigung der Hülle und der Gitterstruktur sowie der Kernstruktur schichtweise synchron erfolgt, wobei die Schritte (a) und (b) wiederholt werden, bis eine vorbestimmte Bauteilhöhe des Bauteils erreicht ist.

Der Einsatz des nanopartikulären Werkstoffs führt aufgrund der großen spezifischen Oberfläche von Nanopartikeln zu einer starken Herabsetzung der Aktivierungsenergie. Infolgedessen wird der Energieeintrag für die Aktivierung der Reaktion des Materials reduziert, welcher für das Erschmelzen, Sintern und/oder Verfestigen in Stufe (b) erforderlich ist. Die damit einhergehende kürzere Zeit für das Erschmelzen, Sintern und/oder Verfestigen führt darüber hinaus zu einer deutlichen Vergrößerung der Aufbaugeschwindigkeit des Bauteils. Zudem weisen Nanopartikel eine wesentlich höhere Reaktivität als beispielsweise Mikropartikel auf. Wenn somit nicht das zu erzeugende Kernmaterial in seiner endgültigen chemischen Struktur als Werkstoff eingesetzt wird, sondern ein chemisches Vorläuferprodukt (Edukt), so wird die zur Auslösung der chemischen Umwandlung erforderliche Energiemenge noch weiter herabgesetzt. Insgesamt ergeben sich durch die Reduzierung des notwendigen Energieeintrags sowie die Beschleunigung der Aufbaugeschwindigkeit (Senkung der gesamten Fertigungszeit) signifikante wirtschaftliche Vorteile in der Fertigung.

Unter Gitterstruktur wird im Rahmen der vorliegenden Erfindung eine relativ zu einer mittleren Wandstärke der Hüllstruktur filigrane, zwei- oder dreidimensionale, regelmäßige oder unregelmäßige Struktur verstanden, die aus feinen, periodischen, beispielsweise stab-, faden- oder bandförmigen Elementen oder nicht-periodischen Elementen, wie zelluläre und schaumartige Strukturen zusammengesetzt ist. Die Gitterstruktur kann beispielsweise eine netz- oder maschenartige Struktur aufweisen. Die Gitterstruktur durchsetzt die Hülle vorzugsweise vollständig, d.h. von einem Ende bis zum anderen Ende der Hülle. Die innerhalb der Gitterstruktur vorhandenen Zwischenräume sind vorzugsweise miteinander verbunden und mit dem Kernmaterial vorzugsweise vollständig gefüllt.

Es versteht sich, dass der Begriff Werkstoff auch aus mehreren Komponenten bestehende Werkstoffgemische umfassen kann. Unter anderem können auch Vorlegierungen genutzt werden. Sie besitzen den Vorteil, dass der Schmelzpunkt stark reduziert werden kann. Infolgedessen, kann die Aktivierungsenergie weiter reduziert werden.

Nach einer vorteilhaften Ausgestaltung des Verfahrens wird auch der Werkstoff des Hüllmaterials, welches für den generativen Aufbau der Hülle sowie der Gitterstruktu verwndet wird, in nanopartikulärer Form eingesetzt. Hieraus ergeben sich weitere Vorteile hinsichtlich des Energiebedarfs und der Aufbaugeschwindigkeit des Verfahrens sowie der Materialeigenschaften des Bauteils, welche vorstehend bereits angesprochen wurden. Demgegenüber werden herkömmlich für den generativen Aufbau von Bauteilen mittels Strahlschmelzverfahren Pulverwerkstoffe mit mittleren Partikeldurchmessern im Bereich von 10 µm oder größer verwendet.

Der nanopartikuläre Werkstoff des Hüllmaterials und/oder des Kernmaterials weist mit Vorzug einen mittleren Partikeldurchmesser im Bereich von 1 bis 500 nm auf. Besonders bevorzugt werden Werkstoffe mit mittlerem Partikeldurchmesser im Bereich von 1 bis 100 nm, vorzugsweise im Bereich von 5 bis 50 nm, eingesetzt, womit gemeint ist, dass wenigstens eine externe Abmessung eines Partikels in diesen Bereichen liegt. Dabei können bezogen auf die Partikelanzahl wenigstens 50 %, insbesondere wenigstens 60 %, vorzugsweise wenigstens 70 % des nanopartikulären Werkstoffs des Hüll- und/oder des Kernmaterials die genannten mittleren Partikeldurchmesser aufweisen. Die Nanopartikel können eine im Wesentlichen sphärische Form aufweisen aber auch beliebige andere Ausgestaltungen aufweisen, in einem freien ungebundenen Zustand vorliegen oder als Aggregat oder Agglomerat.

Der partikuläre Werkstoff des Kernmaterials und/oder der Werkstoff des Hüllmaterials umfasst grundsätzlich Partikel, insbesondere Nanopartikel. Dabei wird der Werkstoff in Form eines Pulvers eingesetzt, das in unterschiedlichen Formen vorliegen kann. Insbesondere kann das Pulver trocken, als Granulat, in Suspension, als Paste oder in anderen Erscheinungsformen aufgebracht werden.

Bei dem in Stufe (a) erfolgenden generativen Aufbau der Hülle und der Gitterstruktur kommt das selektive Laserschmelzverfahren (Selective Laser Melting SLM), zum Einsatz. Es versteht sich, dass der Laser computergesteuert ist, wobei auf 3D-Daten des zu fertigenden Bauteils zugegriffen wird, die durch die eingangs beschriebenen Techniken des Slicens und Hatchens, verarbeitet wurden.

Das erfindungsgemäße Verfahren kann prinzipiell nach zwei unterschiedlichen Arbeitsabläufen durchgeführt werden, nämlich durch einen sequentiellen Aufbau, wobei zunächst die Hülle und die Gitterstruktur und anschließend die Kernstruktur gebildet werden, oder einem synchronen (parallelen) Aufbau der genannten Komponenten.

Gemäß der sequentiellen Verfahrensweise wird bis zu einer bestimmten Bauteilhöhe des Bauteils, vorzugsweise der Endhöhe des Bauteils, zunächst die Hülle und die Gitterstruktur schichtweise durch Wiederholungen der oben genannten Schritte (a1) und (a2) generativ aufgebaut. Anschließend wird der (von nicht-verfestigtem Werkstoff des Hüllmaterials befreite) Innenraum der Hülle mit dem nanopartikulären Werkstoff des Kernmaterials oder zumindest seines Edukts befüllt und dieser Werkstoff durch Erschmelzen, Sintern und/oder Verfestigen zur Erzeugung der Kernstruktur des Bauteils umgesetzt. Da nanopartikuläre Werkstoffe in Pulverform nur eine sehr geringe Rieseltendenz aufweisen, kann bei dieser Verfahrensweise das Befüllen der Hülle mit den Nanopartikeln durch Beaufschlagung des Bauteils mit Ultraschall oder durch Lufteindüsung unterstützt werden. Diese Vorgehensweise empfiehlt sich insbesondere im Falle einer feinteiligen inneren Gitterstruktur oder bei sehr komplexen Bauteilgeometrien. Bei der sequentiellen Fertigung kann der gleiche Werkstoff für das Kernmaterial und das Hüllmaterial eingesetzt werden oder es können unterschiedliche Werkstoffe für diese Komponenten verwendet werden.

Bei der synchronen Verfahrensweise erfolgt die Fertigung der Hülle und der Gitterstruktur sowie die Fertigung der Kernstruktur schichtweise parallel, wobei die Schritte (a) und (b) wiederholt werden, bis eine vorbestimmte Bauteilhöhe des Bauteils erreicht ist. Bei der synchronen Fertigungsweise ist bevorzugt vorgesehen, den gleichen Werkstoff für das Hüllmaterial und für das Kernmaterial zu verwenden. Somit wird aus jeder einzelnen aufgebrachten Schicht des Werkstoffs (Schritt (a1)) zunächst die entsprechende Schicht der Hülle und der Gitterstruktur verfestigt (Schritt (a2)) und anschließend die restliche, in dem Innenraum verbleibende Werkstoffschicht verfestigt (Schritt (b)). Diese Schritte werden wiederholt, bis das Bauteil fertig gestellt ist, wobei die Fertigung vorzugsweise mit Schritt (a) abschließt, wenn eine geschlossene Hülle gefertigt werden soll. Die Fertigung der Kernstruktur aus einem anderen Material als das Hüllmaterial ist zwar grundsätzlich auch bei der synchronen Verfahrensweise nicht ausgeschlossen, wegen des Erfordernisses der Entfernung des Werkstoffs des Hüllmaterials jeweils im Anschluss an die Verfestigung der Hülle und der Gitterstruktur jedoch deutlich aufwendiger und deswegen weniger bevorzugt.

Grundsätzlich bei allen Verfahrensvarianten kann der eingesetzte Werkstoff aus dem eigentlichen Kern- beziehungsweise Hüllmaterial bestehende Partikel enthalten, das heißt in der endgültigen chemischen Form der jeweiligen herzustellenden Materialien. In diesem Fall erfolgt die Verfestigung in Schritt (b) beziehungsweise Schritt (a2) durch Erschmelzen und/oder Sintern und anschließendes Erstarren, ohne dass eine chemische Veränderung des Werkstoffs stattfindet.

Nach einer bevorzugten Ausführungsform jedoch umfasst der Werkstoff des Kern- und/oder des Hüllmaterials wenigstens ein Edukt des Kernmaterials beziehungsweise des Hüllmaterials. In diesem Fall wird durch geeigneten Energieeintrag eine exotherme chemische Reaktion des Edukts zu dem Kern- beziehungsweise Hüllmaterial ausgelöst, wodurch das Erschmelzen, Sintern und/oder Verfestigen in Schritt (b) beziehungsweise in Schritt (a2) erfolgt. Beispielsweise kann das wenigstens eine Edukt zwei oder mehr Metalle umfassen, die im Wege der exothermen Reaktion eine intermetallische Phase miteinander ausbilden. Beispielsweise kann der Werkstoff eine Mischung aus Titan und Aluminium umfassen, welche zu einem Titanaluminid wie Ti₃Al, TiAl oder TiAl₃ reagiert. Weitere Beispiele umfassen eine Nickel/Aluminiummischung, die zu Ni₃Al reagiert, eine Nickel/Titanmischung, die zu NiTi reagiert, eine Kupfer/Zinnmischung, die zu Cu₃Sn oder Cu₃Sn₅ reagiert, eine Niob/Zinnmischung, welche die intermetallische Phase Nb₃Sn ausbildet und viele dergleichen mehr. Ebenfalls ist möglich, dass der Werkstoff des Kern- und/oder des Hüllmaterials ein Metall als Edukt umfasst, welches in Gegenwart von Luftsauerstoff ein Oxid auszubilden vermag. Beispielsweise kann hier partikuläres Silber eingesetzt werden, welches zu Silberoxid Ag₂O reagiert. Im Falle der Verwendung von reaktiven Edukten als Werkstoff kommt die nanopartikuläre Struktur besonders vorteilhaft zum Tragen, da Nanopartikel eine wesentlich höhere Reaktivität aufweisen und somit weniger Energieeintrag zum Auslösen der chemischen Umwandlung erforderlich ist.

Das Erschmelzen, Sintern und/oder Verfestigen in Schritt (b) erfolgt insbesondere im Falle der Verwendung eines Edukts des Endmaterials als Werkstoff durch lokale, initiale Zündung und Auslösung einer exothermen chemischen Reaktion, die sich durch das gesamte Material selbsterhaltend fortsetzt. Durch die Wärmefreisetzung im Wege der exothermen Reaktion kommt es zu einem Aufschmelzen und gegebenenfalls Sintern des nanopartikulären Materials und seiner Verfestigung. Die Auslösung einer solchen Reaktion durch Zündung ist allgemein bekannt (siehe beispielsweise DE 10 2007 020 389 A1). Grundsätzlich bei sämtlichen einsetzbaren Werkstoffen kann das Erschmelzen, Sintern und Verfestigen auch durch externe Wärme- beziehungsweise Druckzuführung etwa in einem Ofen gegebenenfalls in kontrollierter Atmosphäre verursacht werden.

Weitere vorteilhafte Ausgestaltungen der Erfindung sind Gegenstand der übrigen Unteransprüche. Die Erfindung soll nachfolgend in Ausführungsbeispielen anhand der zugehörigen Zeichnungen näher erläutert werden. Es zeigen:
- Figur 1: Beispiel für einen Verfahrensablauf zur Fertigung eines kompakten Bauteils mit sequentieller Fertigung der Hülle und der Kernstruktur nach einer ersten Ausgestaltung der Erfindung
- Figur 2: Beispiel für einen Verfahrensablauf zur Fertigung eines kompakten Bauteils mit sequentieller Aufbau der Hülle und der Kernstruktur nach einer zweiten Ausgestaltung der Erfindung und
- Figur 3: Beispiel für einen Verfahrensablauf zur Fertigung eines kompakten Bauteils mit synchronem Aufbau der Hülle und der Kernstruktur nach einer dritten Ausgestaltung der Erfindung.

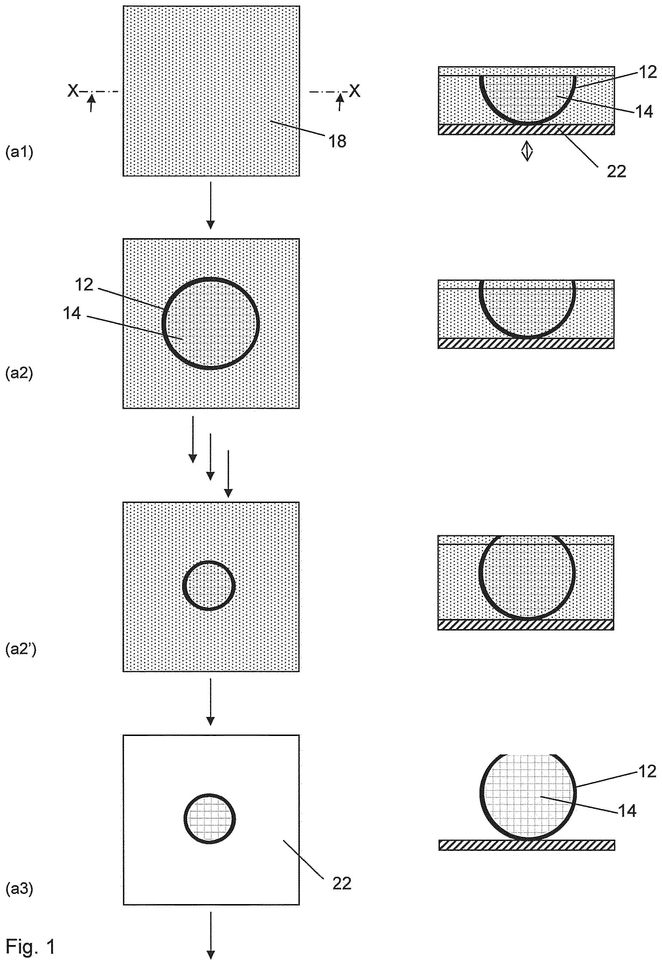

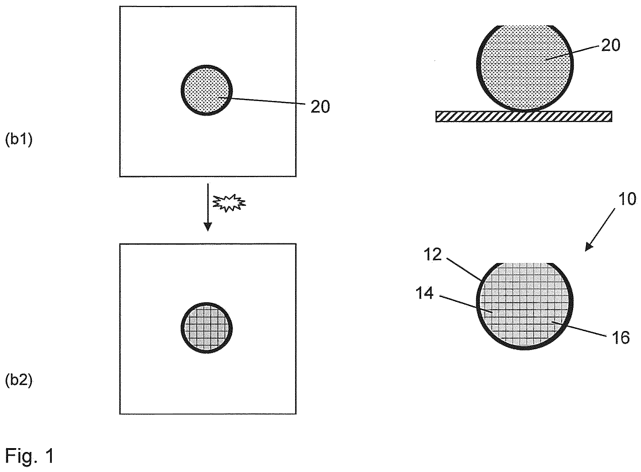

Figur 1 zeigt in schematischer Darstellung die verschiedenen Verfahrensstufen des Verfahrens nach einer ersten Ausgestaltung der Erfindung, bei der die Hülle und die Gitterstruktur sowie die Kernstruktur des Bauteils sequentiell aufgebaut werden. Dabei ist in der linken Spalte jeweils eine Draufsicht auf den Arbeitsbereich dargestellt und in der rechten Spalte eine Schnittansicht gemäß Ebene X-X (siehe Schritt (a1)).

Zunächst soll der Aufbau des fertigen Bauteils erläutert werden, welches im letzten Verfahrensschritt (b2) auf der rechten Seite dargestellt ist. Bei dem insgesamt mit 10 bezeichneten Bauteil handelt es sich im dargestellten Beispiel um ein im Wesentlichen kugelförmiges Gebilde. Es umfasst eine im Wesentlichen kugelschalenförmige Hülle 12, welche das gesamte Volumen mit Ausnahme eines oben dargestellten offenen Abschnitts umhüllt. Innerhalb der Hülle 12 ist eine Gitterstruktur 14 angeordnet, welche im Wesentlichen den gesamten Innenraum der Hülle durchsetzt. Die Hülle 12 sowie die Gitterstruktur 14 bestehen aus dem gleichen Material, welches vorliegend als Hüllmaterial bezeichnet wird. Der Innenraum der Hülle 12 beziehungsweise die Zwischenräume der Gitterstruktur 14 ist im Wesentlichen vollständig mit einer Kernstruktur 16 ausgefüllt, die im vorliegenden Beispiel aus einem unterschiedlichen Material besteht, als die Hülle 12 beziehungsweise die Gitterstruktur 14. Alternativ kann die Kernstruktur 16 jedoch auch aus dem gleichen Material bestehen wie die Hülle 12.

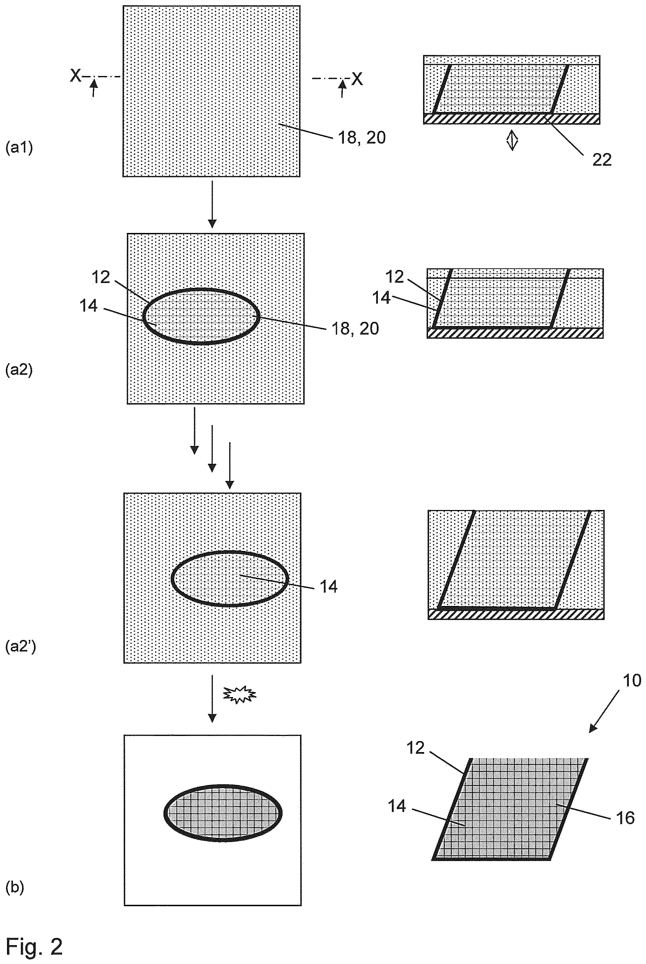

Es versteht sich, dass die relativ einfachen Bauteilgeometrien der Bauteile nach Figur 1 und 2 lediglich Beispiele zur Erläuterung des Verfahrensprinzips darstellen. Selbstverständlich können auch wesentlich komplexere Bauteilgeometrien mit den vorgestellten Verfahrensweisen hergestellt werden.

Der in Schritt (a1) der Figur 1 gezeigte Verfahrensabschnitt stellt eine Phase dar, in der bereits einige Verfahrenszyklen durchlaufen sind und somit bereits eine gewisse Bauteilhöhe aufgebaut wurde. In Schritt (a1) wird eine Schicht eines partikulären Werkstoffs 18 des Hüllmaterials oder eines (reaktiven) Edukts desselben auf eine vertikal bewegliche Arbeitsplatte 22 aufgebracht. Der Werkstoff 18 kann nanopartikulär sein. Der partikuläre Werkstoff 18 kann dabei als trockenes Pulver, als Granulat, als Suspension, als Paste oder dergleichen eingesetzt werden. Geeignete Materialien sind, Metalle und Metalllegierungen, Metalloxide, Keramiken oder Glasmaterialien oder deren chemische Vorläuferverbindungen (Edukte). Eine typische Schichtdicke einer in Schritt (a1) aufgebrachten Schicht liegt im Bereich von 10 bis 100 µm und beträgt in einem typischen Fall beispielsweise 30 µm. Auf der rechten Seite des Schritts (a1) ist erkennbar, dass die Schicht des Werkstoffs 18 noch unverarbeitet auf dem bereits teilweise gefertigten Bauteil aufliegt. Das Bauteil befindet sich auf einer vertikal verstellbaren Arbeitsplatte 22. Die neu aufgebrachte Schicht ist in der Darstellung durch eine horizontale Linie vom übrigen Arbeitsbereich getrennt und übertrieben dick dargestellt.

Im nachfolgenden Schritt (a2) wird mittels eines nicht dargestellten computergesteuerten Lasers, insbesondere eines diodengepumpten Festkörper-Faserlasers, die Bauteilkontur entsprechend zuvor ermittelter Laservektoren in dem Werkstoff 18 abgefahren. Dabei kommt es lokal zu einem vollständigen Aufschmelzen und/oder Sintern des Werkstoffs 18 und zu seiner anschließenden Verfestigung, wodurch eine Schicht der Hülle 12 sowie der Gitterstruktur 14 erzeugt wird. Anschließend wird die Arbeitsplatte 22 um die definierte Schichthöhe abgesenkt und die Schritte (a1) und (a2) für die nachfolgende aufzubauende Schicht des Bauteils erneut ausgeführt. Die Schritte (a1) und (a2) werden sooft wiederholt, bis eine vorbestimmte Bauteilhöhe erreicht ist (siehe Schritt (a2')).

Sodann wird in einem nachfolgenden Schritt (a3) der nicht verfestigte Werkstoff 18, der sich innerhalb und außerhalb des Bauteils 10 befindet, entfernt. Dieser Vorgang kann durch Ultraschalleinwirkung oder durch den Einsatz von Druckluft erleichtert werden. Zurück bleibt eine im Wesentlichen hohle Hülle 12, die von der Gitterstruktur 14 durchsetzt wird.

Nach Abschluss der Verfahrensschritte (a1) bis (a3), mit denen somit der Aufbau der Hülle 12 sowie der Gitterstruktur 14 erfolgt, schließt die Erzeugung der Kernstruktur 16 an. Zu diesem Zweck wird in Schritt (b1) der Innenraum der Hülle 12 mit einem nanopartikulären Werkstoff 20 des Kernmaterials oder zumindest eines Edukts desselben befüllt. Der nanopartikuläre Werkstoff 20 kann dabei als trockenes Pulver, als Granulat, als Suspension, als Paste oder dergleichen eingesetzt werden. Geeignete Materialien sind, Metalle und Metalllegierungen, Metalloxide, Keramiken oder Glasmaterialien oder deren chemische Vorläuferverbindungen (Edukte). Um die vollständige Ausfüllung des Innenraums mit dem Werkstoff 20 zu erleichtern, kann das Bauteil mit Ultraschall beaufschlagt werden oder die Verteilung des Werkstoffs 20 durch Lufteindüsung unterstützt werden.

Anschließend erfolgt in Schritt (b2) die Ausbildung der Kernstruktur 16 des Bauteils 10, indem der nanopartikuläre Werkstoff 20 schrumpfungskompensierend erschmolzen, gesintert und/oder verfestigt wird. Handelt es sich bei dem nanopartikulären Werkstoff 20 bereits um das eigentliche Kernmaterial, so kann durch externe Wärmezufuhr beispielsweise in einem Ofen die für das Erschmelzen oder Sintern erforderliche Temperatur dargestellt werden. Im Falle eines reaktiven Edukts des Kernmaterials kann darüber hinaus auch die Reaktion zum Kernmaterial durch lokale Zündung ausgelöst werden. Die einsetzende exotherme Reaktion setzt sich durch das gesamte Werkstoffmaterial 20 fort, führt zu seiner Erwärmung und somit seiner Aufschmelzung beziehungsweise Sinterung.

Die Schritte (b1) bis (b2) umfassen somit die Herstellung der Kernstruktur 16. In Abweichung von der dargestellten Vorgehensweise, in welcher die gesamte Kernstruktur 16 durch einmalige Durchführung der Schritte (b1) und (b2) hergestellt wird, kann dies auch abschnittsweise erfolgen, beispielsweise in zwei bis vier Abschnitten. Dies kann sich insbesondere bei sehr komplexen Bauteilstrukturen anbieten.

Eine zweite Ausgestaltung des erfindungsgemäßen Verfahrens ist in Figur 2 dargestellt, bei dem die Hülle 12, die Gitterstruktur 14 sowie die Kernstruktur 16 des Bauteils 10 aus gleichem Werkstoff bestehen. Dabei handelt es sich in dem dargestellten Verfahren um eine Variante des Verfahrens nach Figur 1. Es wird im Wesentlichen auf die Unterschiede zur ersten Ausführungsform nach Figur 1 eingegangen werden, wobei gleiche Bezugszeichen für übereinstimmende Elemente wie in Figur 1 verwendet werden.

Bei dem Bauteil 10 dieses Beispiels handelt es sich um einen geneigten Zylinder mit elliptischer Grundfläche (siehe Figur 2(c)).

Der dargestellte Verfahrensablauf zeigt in Schritt (a1) wiederum eine Phase, bei der das Bauteil bereits teilweise gefertigt ist. In Schritt (a1) wird eine Schicht eines nanopartikulären Werkstoffs 18 des Hüllmaterials, das hier gleichzeitig der Werkstoff 20 für das Kernmaterial ist, auf das bereits teilweise gefertigte Bauteil aufgebracht. Im anschließenden Schritt (a2) erfolgt - wie bereits in Figur 1 erläutert - der Aufbau einer Schicht der Hülle 12 sowie der Gitterstruktur 14 im SLM-Verfahren. Die Schritte (a1) und (a2) werden sooft wiederholt, bis in Schritt (a2') schließlich die gewünschte Bauteilhöhe erreicht ist.

In Abweichung zu dem vorstehend erläuterten Ausführungsbeispiel nach Figur 1 wird nach Abschluss des generativen Aufbaus von Hüll- 12 und Gitterstruktur 14 der sich im Inneren der aufgebauten Struktur befindliche Werkstoff 20 nicht entfernt. Anstelle dessen verbleibt der Werkstoff 20 des Kernmaterials, welcher wie erwähnt hier identisch mit dem Werkstoff 18 des Hüllmaterials ist, im Inneren der Geometrie und wird nun in einem anschließenden Schritt (b) durch Erschmelzen, Sintern und/oder ein anderes Verfestigungsverfahren verfestigt. Wie bereits vorstehend beschrieben, kann zu diesem Zweck eine externe Wärmezufuhr erfolgen oder eine lokale Zündung einer exothermen chemischen Reaktion.

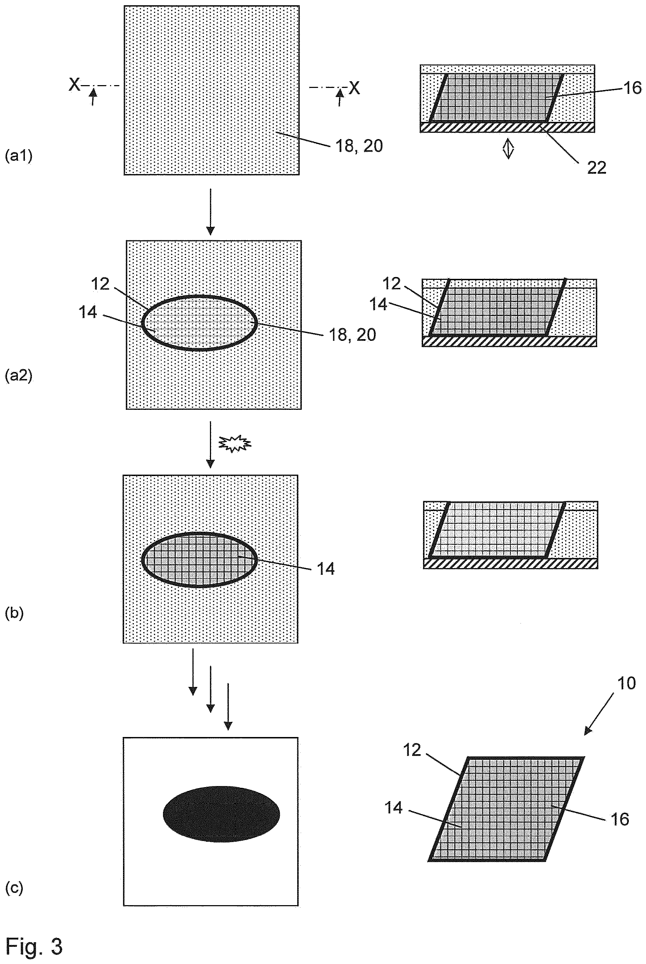

Eine dritte Ausgestaltung des erfindungsgemäßen Verfahrens ist in Figur 3 dargestellt, bei dem die Hülle 12, die Gitterstruktur 14 sowie die Kernstruktur 16 des Bauteils 10 schichtweise und synchron aufgebaut werden. Es wird im Wesentlichen auf die Unterschiede zur ersten Ausführungsform nach Figur 1 eingegangen werden, wobei gleiche Bezugszeichen für übereinstimmende Elemente wie in Figur 1 verwendet werden.

Bei dem Bauteil 10 dieses Beispiels handelt es sich wie in Figur 2 um einen geneigten Zylinder mit elliptischer Grundfläche (siehe Figur 3(c)).

Der dargestellte Verfahrensablauf zeigt in Schritt (a1) wiederum eine Phase, bei der das Bauteil bereits teilweise gefertigt ist. Anders als zuvor beschrieben, ist in dem teilweise gefertigten Bauteil bereits auch die Kernstruktur 16 bis zur aktuellen Arbeitshöhe ausgebildet (s. Schritt (a1), rechte Seite). Dabei wird in Schritt (a1) eine Schicht eines nanopartikulären Werkstoffs 18 des Hüllmaterials, das hier gleichzeitig der Werkstoff 20 für das Kernmaterial ist, auf das bereits teilweise gefertigte Bauteil aufgebracht. Im anschließenden Schritt (a2) erfolgt - wie bereits in Figur 1 erläutert - der Aufbau einer Schicht der Hülle 12 sowie der Gitterstruktur 14 im SLM-Verfahren.

In Abweichung zu dem vorstehend erläuterten Ausführungsbeispiel nach Figur 1 oder 2 wird nun in einem anschließenden Schritt (b) die entsprechende Schicht der Kernstruktur 14 durch Erschmelzen, Sintern und/oder Verfestigen des Werkstoffs 20 des Kernmaterials, welches wie erwähnt hier identisch mit dem Werkstoff 18 des Hüllmaterials ist, erzeugt. Wie bereits vorstehend beschrieben, kann zu diesem Zweck eine externe Wärmezufuhr erfolgen oder eine lokale Zündung einer exothermen chemischen Reaktion.

Die Schritte (a1) bis (b) werden sooft wiederholt, bis eine vorbestimmte Bauteilhöhe, insbesondere die Endbauteilhöhe des Bauteils 10 erreicht ist.

Im dargestellten Beispiel endet das Verfahren mit der Erzeugung der obersten Schicht der Hülle 12, was in Schritt (c) dargestellt ist. Es versteht sich, dass Schritt (c) im Wesentlichen die Verfahrensschritte (a1) und (a2) zur Erzeugung der Hülle 12 umfasst, nämlich das Aufbringen einer weiteren Schicht des Werkstoffs 18, 20 und dessen Verfestigung im SLM-Verfahren.

Aus den beispielhaft dargestellten Verfahrensabläufen ist ersichtlich, dass es sich bei dem erfindungsgemäßen Verfahren um ein kombiniertes Strahlschmelzverfahren handelt. Während die Hülle 12 und die Gitterstruktur 12 durch Strahlschmelzen gefertigt wird, wird die Kernstruktur 16 mit einer abweichenden Technik dargestellt.

Selbst in dem Fall der Verwendung identischer Werkstoffe für die Hülle 12 und die Gitterstruktur 12 einerseits und die Kernstruktur 16 andererseits, lässt sich das mit dem erfindungsgemäßen Verfahren hergestellte Bauteil, bei dem zumindest die Kernstruktur aus einem nanopartikulären Werkstoff gefertigt ist, von mit einem herkömmlichen Verfahren hergestellten Bauteilen eindeutig mittels eines geeigneten Analyseverfahrens unterscheiden. Hier sind insbesondere die Schliffbildanalyse zur Phasenbestimmung sowie die Laserinduzierte Plasmaspektroskopie (LIBS) zur Aufbau- und Strukturanalyse zu nennen. Darüber hinaus lassen sich die eingesetzten Materialien, insbesondere die eingesetzten Legierungselemente mittels EDX-Analyse oder Schliffbildanalyse nachweisen, die Verbundstruktur eines Einkomponentenwerkstoffs mittels Schliffbildanalyse zur Phasenbestimmung, die Verbundstruktur eines Mehrkomponentenwerkstoffs mittels CT-Prüfverfahren oder Ultraschallprüfung, die elementare Zusammensetzung durch Röntgenfluoreszenzanalyse.

Das erfindungsgemäße Verfahren kann sowohl zur Neufertigung von Bauteilen als auch zur Reparatur oder Überarbeitung von Bauteilen eingesetzt werden. Mögliche Anwendungsgebiete umfassen die Medizintechnik, den Maschinenbau, die Gummi und Kunststoff verarbeitende Industrie, den Fahrzeugbau, die Elektrotechnik, die Metallindustrie, keramische Verbundwerkstoffe, Hochtemperaturverbundwerkstoffe, Feinwerktechnik, Mess-, Steuer- und Regelungstechnik, und viele mehr.

### Bezugszeichenliste

- 10: Bauteil
- 12: Hülle
- 14: Gitterstruktur
- 16: Kernstruktur
- 18: Werkstoff für das Hüllmaterial
- 20: Werkstoff für das Kernmaterial
- 22: Arbeitsplatte

## Patentansprüche

1. Verfahren zur Fertigung eines kompakten Bauteils (10), welches eine Hülle (12) und eine innerhalb der Hülle (12) befindliche Gitterstruktur (14) aus einem Hüllmaterial umfasst sowie ferner eine, einen Innenraum der Hülle (12) füllende Kernstruktur (16) aus einem Kernmaterial, wobei das Verfahren die Stufen umfasst:
(a) generativer Aufbau zumindest einer, entlang einer Schnittebene des Bauteils (10) verlaufenden Schicht der Hülle (12) und der Gitterstruktur (14) aus einem partikulären Werkstoff (18) des Hüllmaterials oder zumindest eines Edukts desselben mittels eines Strahlschmelzerfahrens, umfassend die Schritte:
(a1) Aufbringen einer Schicht des partikulären Werkstoffs (18) des Hüllmaterials oder wenigstens eines Edukts desselben und
(a2) Erschmelzen, Sintern und/oder Verfestigen des Werkstoffs (18) zur Ausbildung einer Schicht der Hülle (12) und der Gitterstruktur (14) durch Einstrahlen von Laserlicht entsprechend einer Kontur des Bauteils entlang der Schnittebene des Bauteils (10)
und
(b) Erschmelzen, Sintern und/oder Verfestigen eines in dem Innenraum der zumindest einen Schicht der Hülle (12) befindlichen nanopartikulären Werkstoffs (20) des Kernmaterials oder zumindest eines Edukts desselben zur Ausbildung der Kernstruktur (16) des Bauteils (10),
wobei
bis zu einer vorbestimmten Bauteilhöhe des Bauteils zunächst die Hülle (12) und die Gitterstruktur (14) schichtweise durch Wiederholungen der Schritte (a1) und (a2) generativ aufgebaut werden, anschließend (b1) der Innenraum der Hülle (12) mit dem nanopartikulären Werkstoff (20) des Kernmaterials oder zumindest eines Edukts desselben befüllt wird oder der Innenraum mit dem Werkstoff (20) des Kernmaterials, der mit dem Werkstoff (12) des Hüllmaterials identisch ist, befüllt bleibt, und (b2) durch Erschmelzen, Sintern und/oder Verfestigen die Kernstruktur (16) des Bauteils (10) ausgebildet wird;
oder
die Fertigung der Hülle (12) und der Gitterstruktur (14) sowie der Kernstruktur (16) schichtweise synchron erfolgt, wobei die Schritte (a) und (b) wiederholt werden, bis eine vorbestimmte Bauteilhöhe des Bauteils (10) erreicht ist.

2. Verfahren nach Anspruch 1, wobei auch der Werkstoff (18) des Hüllmaterials eine nanopartikuläre Form aufweist.

3. Verfahren nach Anspruch 1 oder 2, wobei der nanopartikuläre Werkstoff des Hüllmaterials und/oder des Kernmaterials einen mittleren Partikeldurchmesser im Bereich von 1 bis 500 nm, insbesondere im Bereich von 1 bis 100 nm, vorzugsweise im Bereich von 5 bis 50 nm aufweist.

4. Verfahren nach Anspruch 3, wobei wenigstens 50 %, insbesondere wenigstens 60 %, vorzugsweise wenigstens 70 %, des nanopartikulären Werkstoffs des Hüllmaterials und/oder des Kernmaterials die mittleren Partikeldurchmesser im Bereich von 1 bis 500 nm, insbesondere im Bereich von 1 bis 100 nm, vorzugsweise im Bereich von 5 bis 50 nm aufweisen.

5. Verfahren nach einem der Ansprüche 1 bis 4, wobei der Werkstoff des Hüllmaterials und des Kernmaterials identisch sind.

6. Verfahren nach einem der Ansprüche 1 bis 5, wobei der Werkstoff des Kernmaterials und/oder des Hüllmaterials wenigstens ein Edukt des Kernmaterials beziehungsweise des Hüllmaterials umfasst und das Erschmelzen, Sintern und/oder Verfestigen in Schritt (b) beziehungsweise in Schritt (a2) durch Auslösen einer exothermen chemischen Reaktion des wenigstens einen Edukts zu dem Kernmaterials beziehungsweise des Hüllmaterials erfolgt.

7. Verfahren nach Anspruch 6, wobei das wenigstens eine Edukt Metalle umfasst, die im Wege der exothermen Reaktion eine intermetallische Phase miteinander ausbilden oder die ein Metalloxid mit Luftsauerstoff ausbilden.

8. Verfahren nach einem der vorhergehenden Ansprüche, wobei das Erschmelzen, Sintern und/oder Verfestigen in Schritt (b) durch Zündung einer chemischen Reaktion des wenigstens einen Edukts des Kernmaterials ausgelöst wird oder durch externe Wärme- und/oder Druckzuführung.

9. Verfahren nach einem der Ansprüche 1 bis 8, wobei das Befüllen in Schritt (b1) mit dem nanopartikulären Werkstoff (20) des Kernmaterials, durch Ultraschall oder Lufteindüsung unterstützt wird.

10. Kompaktes Bauteil (10) herstellbar mit einem Verfahren nach einem der Ansprüche 1 bis 9, wobei das Bauteil (10) eine Hülle (12) und eine innerhalb der Hülle (12) befindliche Gitterstruktur (14) aus einem Hüllmaterial umfasst sowie eine, einen Innenraum der Hülle (12) füllende Kernstruktur (16) aus einem Kernmaterial, das unterschiedlich vom Hüllmaterial ist, und wobei das Hüllmaterial und/oder das Kernmaterial unabhängig voneinander ausgewählt sind aus der Gruppe bestehend aus metallischen Materialien, keramischen Materialien und/oder Gläsern.

## Claims

1. Method for manufacturing a compact component (10) comprising a shell (12) and a grid structure (14) made of a shell material the grid structure (14) being located inside the shell (12), and further a core structure (16) that fills the interior of the shell (12) and is made of a core material, wherein the method comprises the steps of:
(a) generative construction of at least one layer of the shell (12) and of the grid structure (14) that extends along a sectional plane of the component (10), which layer consists of a particulate material (18) of the shell material or at least one reactant thereof, by means of a beam melting method, comprising the steps of:
(a1) applying a layer of the particulate material (18) of the shell material or of at least one reactant thereof, and
(a2) melting, sintering and/or solidifying the material (18) to produce a layer of the shell (12) and of the grid structure (14) by irradiating with laser light according to a contour of the component along the sectional plane of the component (10)
and
(b) melting, sintering and/or solidifying a nanoparticulate material (20) of the core material or at least one reactant thereof which is located in the interior of the at least one layer of the shell (12), to form the core structure (16) of the component (10),
wherein
initially the shell (12) and the grid structure (14) are constructed generatively layer-by-layer by repetitions of the steps (a1) and (a2) up to a predetermined component height of the component, then (b1) the interior of the shell (12) is filled with the nanoparticulate material (20) of the core material or of at least one reactant thereof, or the interior remains filled with the material (20) of the core material, which is identical to the material (12) of the shell material, and (b2) the core structure (16) of the component (10) is formed by melting, sintering and/or solidification;
or
the shell (12) and the grid structure (14) and the core structure (16) are manufactured synchronously layer-by-layer, wherein the steps (a) and (b) are repeated until a predetermined component height of the component (10) is reached.

2. Method according to Claim 1, wherein the material (18) of the shell material also has a nanoparticulate form.

3. Method according to Claim 1 or 2, wherein the nanoparticulate material of the shell material and/or of the core material has an average particle diameter in the range from 1 to 500 nm, in particular in the range from 1 to 100 nm, preferably in the range from 5 to 50 nm.

4. Method according to Claim 3, wherein at least 50%, in particular at least 60%, preferably at least 70%, of the nanoparticulate material of the shell material and/or of the core material has average particle diameters in the range from 1 to 500 nm, in particular in the range from 1 to 100 nm, preferably in the range from 5 to 50 nm.

5. Method according to any one of Claims 1 to 4, wherein the materials of the shell material and of the core material are identical.

6. Method according to any one of Claims 1 to 5, wherein the material of the shell material and/or of the core material comprises at least one reactant of the core material or of the shell material, respectibely, and the melting, sintering and/or solidification in step (b) and/or step (a2) is performed by initiating an exothermic chemical reaction of the at least one reactant forming the core material or the shell material, respectively.

7. Method according to claim 6, wherein the at least one reactant comprises metals which form an intermetallic phase with each other or which form a metal oxide with atmospheric oxygen by way of the exothermic reaction.

8. Method according to any one of the preceding claims, wherein the melting, sintering and/or solidification in step (b) is initiated by igniting a chemical reaction of the at least one reactant of the core material or by an external supply of heat and/or pressure.

9. Method according to any one of Claims 1 to 8, wherein the filling with the nanoparticulate material (20) of the core material in step (b1) is supported by ultrasound or by air injection.

10. Compact component (10) which is producible with a method according to any one of Claims 1 to 9, wherein the component (10) comprises a shell (12) and a grid structure (14) made of a shell material, the grid structure (14) being located inside the shell (12), and a core structure (16) which fills an interior of the shell (12) and is made of a core material which is different from the shell material, and wherein the shell material and/or the core material is/are selected independently of one another from the group consisting of metallic materials, ceramic materials and/or glass materials.

## Revendications

1. Procédé de fabrication d'un composant compact (10), qui comprend une coque (12) et une structure en treillis (14) située à l'intérieur de la coque (12), constituées d'un matériau de coque, et également d'une structure de noyau (16) qui remplit un espace intérieur de la coque (12), constituée d'un matériau de noyau, le procédé comprenant les étapes de:
(a) conception générative d'au moins une couche de la coque (12) et de la structure en treillis (14) s'étendant le long d'un plan de coupe du composant (10) à partir d'un matériau particulaire (18) du matériau de coque ou au moins une matière de départ de celui-ci au moyen d'un procédé de fusion par jet, comprenant les étapes de:
(a1) application d'une couche du matériau particulaire (18) du matériau de la coque ou au moins une matière de départ de celui-ci et
(a2) fusion, frittage et/ou solidification du matériau (18) pour former une couche de la coque (12) et de la structure en treillis (14) en irradiant une lumière laser correspondant à un contour du composant le long du plan de coupe du composant (10)
et
(b) fusion, frittage et/ou solidification d'un matériau nanoparticulaire (20) du matériau de noyau ou d'au moins une matière de départs de celui-ci situées à l'intérieur de la au moins une couche de la coque (12) pour former la structure de noyau (16) du composant (10)
dans lequel
jusqu'à une hauteur de composant prédéterminée du composant, la coque (12) et la structure en treillis (14) sont tout d'abord conçues en couches en répétant les étapes (a1) et (a2), puis (b1) l'intérieur de la coque (12) est rempli avec le matériau nanoparticulaire (20) du matériau de noyau ou au moins une matière de départ de celui-ci ou l'espace intérieur avec le matériau (20) du matériau du noyau, qui est identique au matériau (12) du matériau de la coque, reste chargé, et (b2) la structure du noyau est réalisée par fusion, frittage et/ou solidification (16) du composant (10),
ou
la production de la coque (12) et de la structure en treillis (14) et de la structure de noyau (16) a lieu de manière synchrone en couches, avec les étapes (a) et (b) étant répétées jusqu'à ce qu'une hauteur de composant prédéterminée du composant (10) soit atteinte.

2. Procédé selon la revendication 1, dans lequel le matériau (18) du matériau de la coque a également une forme nanoparticulaire.

3. Procédé selon la revendication 1 ou 2, dans lequel le matériau nanoparticulaire du matériau de la coque et/ou du matériau du noyau a un diamètre moyen de particules compris entre 1 et 500 nm, en particulier entre 1 et 100 nm, de préférence dans la plage de 5 à 50 nm.

4. Procédé selon la revendication 3, dans lequel au moins 50%, en particulier au moins 60%, de préférence au moins 70%, du matériau nanoparticulaire du matériau de la coque et/ou du matériau du noyau, présentent le diamètre moyen de particules compris entre 1 et 500 nm, en particulier entre 1 et 100 nm, de préférence dans la plage de 5 à 50 nm.

5. Procédé selon une quelconque des revendications 1 à 4, dans lequel le matériau du matériau de la coque et le matériau du noyau sont identiques.

6. Procédé selon une quelconque des revendications 1 à 5, dans lequel le matériau du matériau du noyau et/ou du matériau de la coque comprend au moins une matière de départ du matériau du noyau, respectivement du matériau de la coque et la fusion, le frittage et/ou la solidification a lieu à l'étape (b) ou à l'étape (a2) en déclenchant une réaction chimique exothermique d'au moins une matière de départ pour former le matériau du noyau ou le matériau de la coque.

7. Procédé selon la revendication 6, dans lequel la au moins une matière de départ comprend des métaux qui forment une phase intermétallique les uns avec les autres au moyen de la réaction exothermique ou qui forment un oxyde métallique avec l'oxygène atmosphérique.

8. Procédé selon une quelconque des revendications précédentes, dans lequel la fusion, le frittage et/ou solidification est déclenchée à l'étape (b) par allumage d'une réaction chimique d'au moins une matière de départ du matériau de noyau ou par une alimentation externe en chaleur et/ou en pression.

9. Procédé selon une quelconque des revendications 1 à 8, dans lequel le remplissage à l'étape (b1) avec le matériau nanoparticulaire (20) du matériau de noyau est assisté par ultrasons ou injection d'air.

10. Composant compact (10) pouvant être produit en utilisant un procédé selon une des revendications 1 à 9, dans lequel le composant (10) comprend une coque (12) et une structure en treillis (14) se trouvant à l'intérieur de la coque (12) constituées d'un matériau de coque ainsi que d'une structure de noyau (16) constituée d'un matériau de noyau, remplissant un espace intérieur de la coque (12), qui est différent du matériau de la coque, et dans lequel le matériau de la coque et/ou le matériau du noyau sont choisis indépendamment l'un de l'autre dans le groupe constitué de matériaux métalliques, de matériaux céramiques et/ou de verres.
